# EUROPEAN PATENT APPLICATION

(11) **EP 4 787 155 A1**
(43) Date of publication of application: **05.08.2026**
(21) Application number: 25224255.7
(22) Date of filing: 17.12.2025
(51) Int. Cl.: G06F 8/654, G06F 8/65, H02J 50/80, H02J 50/00, H02J 7/42, H02J 50/10

(54) **FIRMWARE UPDATE APPARATUS AND FIRMWARE UPDATE SYSTEM**

(30) Priority: 03.02.2025 KR 20250013406
(71) Applicant: SAMSUNG SDI CO., LTD., Yongin-si, Gyeonggi-do 17084 (KR)
(72) Inventor: KANG, Sungkoo, 17084 Yongin-si (KR)
(74) Representative: Maiwald GmbH

(57) **Abstract**

A firmware update apparatus includes: a memory slot to or from which a memory storing information about firmware to be updated is configured to be attached or detached; a power supply module configured to supply power to a firmware update target device; and a first processor configured to control an operation of the firmware update apparatus, and to: transmit a request packet including status request information to the firmware update target device and receive a response packet including a response to the status request information; based on receiving the response packet, control power to be supplied to the firmware update target device through the power supply module; and based on the supplying of the power being completed, transmit the information about firmware to be updated, stored in the memory, to the firmware update target device and control a firmware update of the firmware update target device to be performed.

## Description

### BACKGROUND

### 1. Field

Aspects of some embodiments of the present disclosure relate to a firmware update apparatus and a firmware update system.

### 2. Description of the Related Art

Energy storage systems (ESSs) may perform functions of storing a large amount of electricity and supplying electricity to a power grid as needed. Batteries included in the ESSs may include various types of batteries, including lithium-ion batteries, lead-acid batteries, and flow batteries, and each battery type may be optimized for a specific purpose and environment. Battery management systems (BMSs) included in the ESSs may monitor the batteries' states of charge, lifespans, temperatures, and voltages to optimize and manage efficiency and safety of the ESSs.

Firmware may desirably be updated for efficient operations of the BMSs. When the firmware of the BMSs is updatable remotely, users may conveniently perform updates through remote access. However, when the remote access is not possible, each BMS may need to be individually updated on-site, which may require additional equipment. Such additional equipment may include, for example, a laptop computer and a BMS power supply. When the firmware is updated by using a laptop computer, keyboard and mouse operations are required, which is an inconvenience that requires additional time and effort.

The above information disclosed in this Background section is only for enhancement of understanding of the background and therefore the information discussed in this Background section does not necessarily constitute prior art.

### SUMMARY

Aspects of some embodiments of the present disclosure may enable conveniently updating firmware of a battery management system (BMS) without having to use additional equipment.

Additional aspects will be set forth in part in the description which follows and, in part, will be apparent from the description, or may be learned by practice of the presented embodiments of the disclosure.

A firmware update apparatus according to an aspect of the present disclosure includes a memory slot to or from which a memory storing information about firmware to be updated is attached or detached, a power supply module configured to supply power to a firmware update target device, and a first processor configured to control an operation of the firmware update apparatus, wherein the first processor is configured to transmit a request packet including status request information to the firmware update target device and receive a response packet including a response to the status request information from the firmware update target device, based on receiving the response packet, control power to be supplied to the firmware update target device through the power supply module, and based on the supplying of the power being completed, transmit the information about firmware to be updated, stored in the memory, to the firmware update target device and control a firmware update of the firmware update target device to be performed.

A firmware update system according to an aspect of the present disclosure includes a firmware update apparatus and a firmware update target device, wherein the firmware update apparatus includes a first wireless communication module configured to perform data transmission and reception with the firmware update target device wirelessly, a memory slot to or from which a memory storing information about firmware to be updated is attached or detached, a power supply module configured to supply power, a wireless power supply module including a first coil, and a first processor configured to control an operation of the firmware update apparatus to perform a firmware update of the firmware update target device, and the firmware update target device includes a second wireless communication module configured to perform data transmission and reception with the firmware update apparatus wirelessly, a wireless power receiving module arranged to face the wireless power supply module and including a second coil, and a second processor configured to control data transmission and reception with the firmware update apparatus through the second wireless communication module and control the wireless power receiving module to receive power through the wireless power supply module.

In addition, provided are another method for implementing the disclosure, another system for implementing the disclosure, and a computer-readable recording medium having stored therein a computer program for executing the method.

Aspects, features, and characteristics other than those described above may become clear from the following drawings, the claims, and the detailed description of embodiments according to the present disclosure.

### BRIEF DESCRIPTION OF THE DRAWINGS

The above and other aspects, features, and characteristics of certain embodiments of the disclosure will be more apparent from the following description taken in conjunction with the accompanying drawings in which:
FIG. 1 illustrates a configuration of a firmware update system including a firmware update apparatus, according to some embodiments of the present disclosure;
FIG. 2 illustrates a configuration of a firmware update system including a firmware update apparatus, according to some embodiments of the present disclosure; and
FIG. 3 illustrates a configuration of a firmware update system including a firmware update apparatus, according to some embodiments of the present disclosure.

### DETAILED DESCRIPTION

Hereinafter, aspects of some embodiments of the present disclosure will be described in more detail with reference to the accompanying drawings. Terms or words used in the present specification and claims should not be interpreted as being limited to their usual or dictionary meanings, but should be interpreted as meanings and concepts that conform to the technical scope of the disclosure, based on the principle that an inventor may appropriately define the concepts of the terms in order to explain his or her own invention in the best way. Accordingly, embodiments described in the present specification and configurations illustrated in the drawings are merely some example embodiments of embodiments according to the present disclosure and do not represent all of the technical scope of embodiments according to the present disclosure, and thus, it should be understood that there may be various equivalents and modifications that may replace the embodiments at the time of filing the present application. Also, when used in the present specification, the terms "comprise/include" and/or "comprising/including" specify the presence of stated features, numbers, steps, operations, members, elements, and/or groups thereof, but do not preclude the presence or addition of one or more other features, numbers, operations, members, elements, and/or groups thereof. When describing embodiments of the disclosure, the term "may" or "may be" may include "one or more embodiments of the disclosure".

In addition, to help understanding of the disclosure, the attached drawings are not illustrated according to an actual scale, and dimensions of some components may be exaggerated. Also, same reference numbers may be assigned to same components in different embodiments.

When two targets being compared are "the same", the targets may be "substantially the same". Being "substantially the same" may include a deviation that is considered low in the art, for example, a deviation within 5%. Also, uniformity of a parameter in a certain region may indicate uniformity from an average perspective.

Although the terms first, second, etc. are used to describe various components, these components are not limited by such terms. These terms are used only to distinguish one component from another, and unless otherwise specifically stated, it is to be understood that a first component may also be a second component.

Throughout the specification, unless otherwise specifically stated, each element may be singular or plural.

A configuration being arranged "above (or under)" a component or "on (or below)" a component may indicate not only that the configuration is in contact with a top surface (or a bottom surface) of the component, but also that another configuration may be arranged between the component and the configuration arranged on (or below) the component.

When it is described that a component is "connected", "coupled", or "accessed" to another component, the components may be directly connected or accessed to each other, but it should also be understood that another component may be "arranged" between the components or that each component may be "connected", "coupled", or "accessed" through another component. Also, when a portion is electrically coupled to another portion, the portions may be directly coupled to each other or the portions may be coupled to each other with another element therebetween.

Throughout the specification, "A and/or B" may indicate A, B, or A and B unless otherwise specified. In other words, "and/or" includes all or any combination of listed items. The expression "C to D" indicate C or more and D or less, unless otherwise specified.

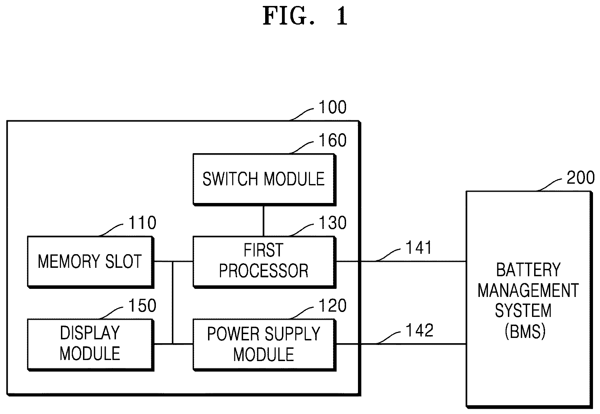

FIG. 1 illustrates a configuration of a firmware update system including a firmware update apparatus 100, according to some embodiments of the present disclosure.

Referring to FIG. 1, the firmware update system according to some embodiments of the present disclosure may include the firmware update apparatus 100 and a battery management system (BMS) 200. According to some embodiments, BMS 200 may be a firmware update target device.

The firmware update apparatus 100 according to some embodiments as illustrated in FIG. 1 may include a memory slot 110, a power supply module 120, a first processor 130, a first cable 141, a second cable 142, a display module 150, and a switch module 160, wherein the first cable 141 and the second cable 142 are connected to the BMS 200.

A memory storing information about firmware to be updated (e.g., a latest version or an old version) may be attached to or detached from the memory slot 110. According to some embodiments, the memory may include a memory card. According to some embodiments, the memory card may include a secure digital (SD) card, a micro SD card, or the like.

The power supply module 120 may supply power required to operate the firmware update apparatus 100 and supply power required to update firmware in the BMS 200. According to some embodiments, the power supply module 120 may include a battery. Because the firmware update apparatus 100 includes the battery as the power supply module 120, the firmware update apparatus 100 may be portable.

The first processor 130 may control operations of the firmware update apparatus 100. For example, the first processor 130 may transmit a request packet including status request information to the BMS 200. Here, the status request information may include information requesting which version of firmware is installed in the BMS 200. The first processor 130 may receive a response packet including a response to status request information from the BMS 200. Here, the response to the status request information may include the version of the firmware installed in the BMS 200.

Based on receiving the response packet from the BMS 200, the first processor 130 may control power to be supplied to the BMS 200 through the power supply module 120. According to some embodiments, power supplied to the BMS 200 may include capacity sufficient to update the firmware of the BMS 200.

When supplying of power to the BMS 200 is completed, the first processor 130 may transmit the information about firmware to be updated, stored in the memory, to the BMS 200 through the first cable 141 and control a firmware update of the BMS 200 to be performed.

According to some embodiments, the first cable 141 may be connected between the first processor 130 and the BMS 200. The second cable 142 may be connected between the power supply module 120 and the BMS 200.

The first processor 130 may transmit the request packet to the BMS 200 through the first cable 141, receive the response packet from the BMS 200, and control the firmware update to be performed by transmitting the information about firmware to be updated to the BMS 200. The first processor 130 may control power of the power supply module 120 to be supplied to the BMS 200 through the second cable 142.

According to some embodiments, the first cable 141 and the second cable 142 may be included in an integrated harness wire. Here, the integrated harness wire may include a single cable in which a data transmission harness wire and a power supply harness wire are bundled together.

The first cable 141 may include the data transmission harness wire included in the integrated harness wire. The second cable 142 may include the power supply harness wire included in the integrated harness wire.

The first processor 130 may transmit the request packet to the BMS 200 through the data transmission harness wire, receive the response packet from the BMS 200, and control the firmware update to be performed by transmitting the information about firmware to be updated to the BMS 200. The first processor 130 may control power of the power supply module 120 to be supplied to the BMS 200 through the power supply harness wire.

According to some embodiments, the first cable 141 may include a harness wire, and the second cable 142 may include a power supply cable different from the harness wire.

The first processor 130 may transmit the request packet to the BMS 200 through the harness wire, receive the response packet from the BMS 200, and control the firmware update to be performed by transmitting the information about firmware to be updated to the BMS 200. The first processor 130 may control power of the power supply module 120 to be supplied to the BMS 200 through the power supply cable.

The display module 150 may display information related to the firmware update. According to some embodiments, the display module 150 may include, for example, a liquid crystal display (LCD).

The first processor 130 may control at least one of a transmission status of the request packet, a reception status of the response packet, a status of supplying power to the BMS 200, an execution status of the firmware update of the BMS 200, or an input status of the switch module 160 described below to be displayed through the display module 150.

The switch module 160 may input an operation initiation for the firmware update.

The first processor 130 may control an operation of the firmware update for the BMS 200 to be initiated based on receiving an input of the switch module 160. Here, the initiation of the operation of the firmware update for the BMS 200 may include performing a first process among the first process to a fourth process described below. The first processor 130 may sequentially perform the second process to the fourth process after performing the first process.

According to some embodiments, processes by which the firmware update apparatus 100 updates the firmware of the BMS 200 may be as follows. First, the first processor 130 may perform the first process of transmitting the request packet to the BMS 200 through the first cable 141. Then, the first processor 130 may perform the second process of receiving the response packet from the BMS 200. Then, the first processor 130 may perform the third process of supplying power to the BMS 200 through the second cable 142. Then, the first processor 130 may perform the fourth process of transmitting the information about firmware to be updated to the BMS 200 to perform the firmware update.

According to some embodiments, the firmware update apparatus 100 may be a portable device such as a laptop personal computer (PC) or a tablet PC.

In the related art, in a case where the firmware update of the BMS 200 is required after an energy storage system (ESS) has been installed, when a device performing the firmware update is capable of being remotely connected to the BMS 200, the firmware update of the BMS 200 is performed remotely. However, when the device performing the firmware update is unable to be remotely connected to the BMS 200, an additional apparatus such as a laptop PC or a BMS power supply device is required. In addition, when the operation of the firmware update is to be performed by using a laptop PC, a user may encounter inconvenience of having to directly operate a keyboard and a mouse. This may cause additional time and effort during the firmware update.

In this regard, embodiments according to the present disclosure may provide the portable firmware update apparatus 100 with a communication function. The firmware update apparatus 100 may be portable by including a built-in battery. The firmware update apparatus 100 may perform data communication with the BMS 200 in units of racks or containers and supply power to the BMS 200. In the related art, when updating the firmware of the BMS 200 through the laptop PC, a controller area network (CAN) to universal serial bus (USB) conversion device that enables communication between a CAN bus and a USB is essential. However, because the firmware update apparatus 100 according to some embodiments may not require the CAN to USB conversion device, installation and operation processes may be relatively simplified, thereby relatively improving overall convenience.

The firmware update apparatus 100 according to some embodiments may automatically determine a status of the BMS 200 and automatically perform the firmware update immediately upon connection or when an input of the switch module 160 is received from the user. The user may select a version of firmware to update (a latest version or a previous version). In addition, the firmware update apparatus 100 may overcome limitations of an existing wired connection method by adopting wireless communication and a wireless power supply method, and may facilitate installation and use. Such features may make the firmware update efficient, save time and effort, and relatively increase work efficiency.

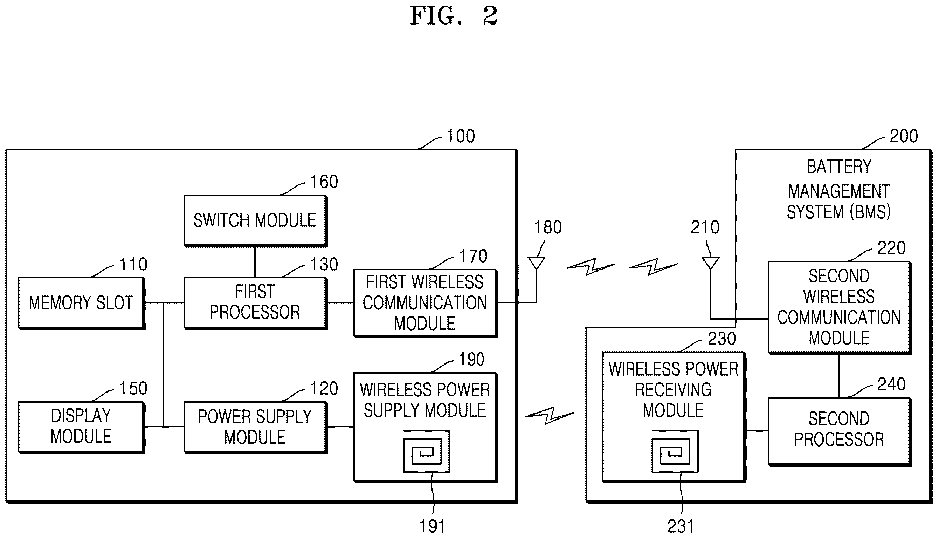

FIG. 2 illustrates a configuration of a firmware update system including the firmware update apparatus 100, according to some embodiments of the present disclosure. In the descriptions below, descriptions about details overlapping those of FIG. 1 are omitted.

Referring to FIG. 2, the firmware update system according to some embodiments of the present disclosure may include the firmware update apparatus 100 and the BMS 200. According to some embodiments, BMS 200 may be a firmware update target device.

The firmware update apparatus 100 according to some embodiments as illustrated in FIG. 2 may include the memory slot 110, the power supply module 120, the first processor 130, the display module 150, the switch module 160, a first wireless communication module 170, a first antenna 180, and a wireless power supply module 190.

The BMS 200 may include a second antenna 210, a second wireless communication module 220, a wireless power receiving module 230, and a second processor 240.

Some details about the memory slot 110, the power supply module 120, the display module 150, and the switch module 160 included in the firmware update apparatus 100 illustrated in FIG. 2 are the same as those in FIG. 1, and thus may be omitted.

In FIG. 1, data communication may be performed through the first cable 141 connected between the firmware update apparatus 100 and the BMS 200, and power may be supplied to the BMS 200 through the second cable 142. On the other hand, according to some embodiments, data communication and power supply may be performed wirelessly.

The first wireless communication module 170 may perform wireless communication with the BMS 200 under control by the first processor 130. According to some embodiments, a wireless communication method may include Wi-Fi, Bluetooth, radio frequency identification (RFID), or the like.

The first processor 130 may control the request packet to be wirelessly transmitted to the BMS 200 through the first wireless communication module 170 and the first antenna 180. The first processor 130 may control the response packet to be wirelessly received from the BMS 200 through the first antenna 180 and the first wireless communication module 170.

The wireless power supply module 190 may supply power of the power supply module 120 to a first coil 191 under control by the first processor 130. The first coil 191 may receive power from the power supply module 120 and generate a magnetic field. According to some embodiments, the wireless power receiving module 230 included in the BMS 200 may face the wireless power supply module 190 from a certain distance, and may include a second coil 231. When the magnetic field is generated in the first coil 191 of the wireless power supply module 190, an induction current is supplied to the second coil 231 of the wireless power receiving module 230, and the wireless power receiving module 230 may receive power through the induction current.

The first processor 130 may control power of the power supply module 120 to be supplied to the first coil 191 so that the first coil 191 generates the magnetic field, based on receiving the response packet from the BMS 200. The first processor 130 may control the wireless power receiving module 230 to receive power through the induction current induced from the first coil 191 to the second coil 231 according to the generation of the magnetic field.

The first processor 130 may control the information about firmware to be updated to be transmitted to the BMS 200 through the first wireless communication module 170 and the first antenna 180 when the BMS 200 receives power, and the firmware update to be performed.

According to some embodiments, the second antenna 210 and the second wireless communication module 220 included in the BMS 200 may receive the request packet transmitted from the firmware update apparatus 100.

The second processor 240 may generate the response packet corresponding to the request packet and control the response packet to be transmitted to the firmware update apparatus 100 through the second wireless communication module 220 and the second antenna 210.

The wireless power receiving module 230 included in the BMS 200 may receive power through the induction current induced in the second coil 231 according to the generation of the magnetic field. The second processor 240 may control an operation of the wireless power receiving module 230 to receive power from the firmware update apparatus 100. In other words, the second processor 240 may control the wireless power receiving module 230 to receive power through the induction current induced to the second coil 231 according to the generation of the magnetic field.

The second antenna 210 and the second wireless communication module 220 included in the BMS 200 may receive the information about firmware to be updated from the firmware update apparatus 100.

According to some embodiments, processes by which the firmware update apparatus 100 updates the firmware of the BMS 200 may be as follows. First, the first processor 130 may perform a first process of transmitting the request packet to the BMS 200 through the first wireless communication module 170 and the first antenna 180. Then, the first processor 130 may perform a second process of receiving the response packet from the BMS 200 through the first antenna 180 and the first wireless communication module 170. Then, the first processor 130 may perform a third process of supplying the induction current to the BMS 200 through the wireless power supply module 190. Then, the first processor 130 may perform a fourth process of performing the firmware update by transmitting the information about firmware to be updated to the BMS 200 through the first wireless communication module 170 and the first antenna 180. By performing the first process to the fourth process, the firmware update apparatus 100 may update the firmware of the BMS 200.

According to some embodiments, the firmware update apparatus 100 and the BMS 200 may be connected with a cable to perform data communication. Here, the cable may be the same as the first cable 141 illustrated in FIG. 1. Accordingly, the firmware update apparatus 100 and the BMS 200 may perform the data communication through the cable, and the firmware update apparatus 100 may supply wireless power to the BMS 200.

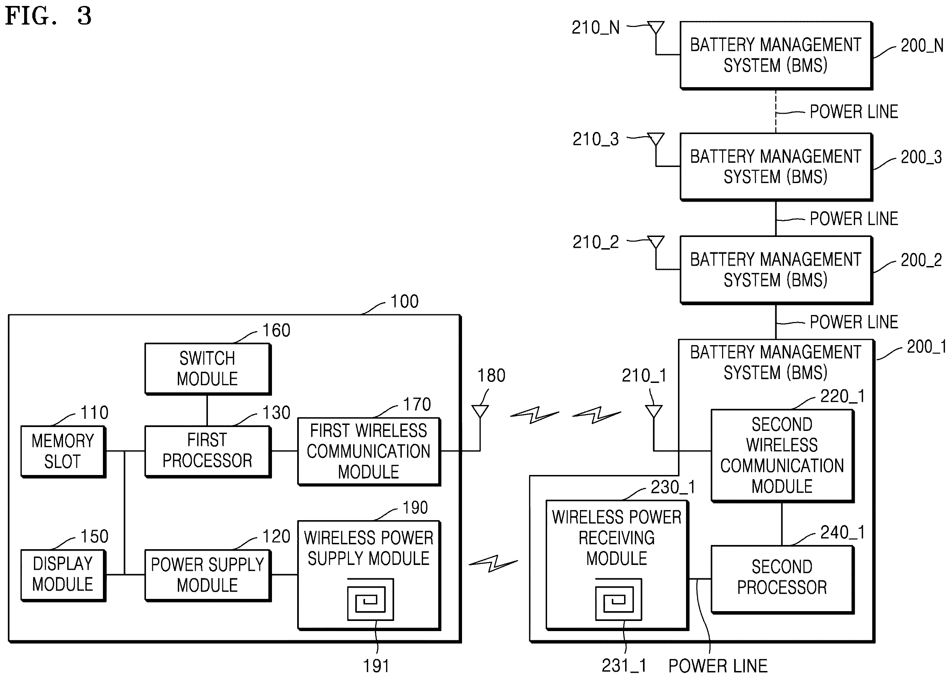

FIG. 3 illustrates a configuration of a firmware update system including the firmware update apparatus 100, according to some embodiments of the present disclosure. In the descriptions below, some descriptions about details overlapping those of FIGS. 1 and 2 may be omitted.

Referring to FIG. 3, the firmware update system according to some embodiments of the present disclosure may include the firmware update apparatus 100 and the BMS 200. According to some embodiments, BMS 200 may be a firmware update target device.

The firmware update apparatus 100 according to some embodiments as illustrated in FIG. 3 may include the memory slot 110, the power supply module 120, the first processor 130, the display module 150, the switch module 160, the first wireless communication module 170, the first antenna 180, and the wireless power supply module 190. The configuration of the firmware update apparatus 100 illustrated in FIG. 3 may be the same as the configuration of the firmware update apparatus 100 illustrated in FIG. 2. Accordingly, some descriptions about the firmware update apparatus 100 illustrated in FIG. 3 may be omitted.

The BMS 200 illustrated in FIG. 3 may include a first BMS 200_1 to an Nth BMS 200_N physically connected to each other through a power line. Each of the first BMS 200_1 to the Nth BMS 200_N may include a second antenna, a second wireless communication module, and a second processor. According to some embodiments, operations of the second antenna, the second wireless communication module, and the second processor are the same as the operations of the second antenna 210, the second wireless communication module 220, and the second processor 240 illustrated in FIG. 2, and thus, some detailed descriptions thereof may be omitted.

According to some embodiments, a wireless power receiving module may be included in any one of the first BMS 200_1 to the Nth BMS 200_N. After one of the first BMS 200_1 to the Nth BMS 200_N receives power through the wireless power receiving module, power may be supplied to remaining firmware update target devices through the power line.

For example, in FIG. 3, it may be assumed that the first BMS 200_1 includes the wireless power receiving module. Accordingly, the first BMS 200_1 illustrated in FIG. 3 may include a second antenna 210_1, a second wireless communication module 220_1, a wireless power receiving module 230_1, and a second processor 240_1. Here, operations of the wireless power receiving module 230_1 are the same as the operations of the wireless power receiving module 230 illustrated in FIG. 2, and thus, some detailed descriptions thereof may be omitted.

The first BMS 200_1 may supply power to the remaining second BMS 200_2 to Nth BMS 200_N through the power line after receiving power through the wireless power receiving module 230_1.

According to some embodiments of the present disclosure, working time and effort may be relatively reduced through a firmware update apparatus of a BMS.

In addition, by reducing the pieces of additional equipment for a firmware update of the BMS, the firmware update in the field may be performed relatively efficiently.

The electronic or electric devices and/or any other relevant devices or components according to embodiments of the present invention described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

## Claims

1. A firmware update apparatus (100) comprising:
a memory slot (110) to or from which a memory storing information about firmware to be updated is configured to be attached or detached;
a power supply module (120) configured to supply power to a firmware update target device; and
a first processor (130) configured to control an operation of the firmware update apparatus (100),
wherein the first processor (130) is configured to:
transmit a request packet including status request information to the firmware update target device and receive a response packet including a response to the status request information from the firmware update target device;
based on receiving the response packet, control power to be supplied to the firmware update target device through the power supply module (120); and
based on the supplying of the power being completed, transmit the information about firmware to be updated, stored in the memory, to the firmware update target device and control a firmware update of the firmware update target device to be performed.

2. The firmware update apparatus (100) as claimed in claim 1, further comprising:
a first cable (141) connected between the first processor (130) and the firmware update target device; and
a second cable (142) connected between the power supply module (120) and the firmware update target device,
wherein the first processor (130) is configured to:
transmit the request packet to the firmware update target device through the first cable (141);
receive the response packet from the firmware update target device;
transmit the information about firmware to be updated to the firmware update target device to control the firmware update to be performed; and
control power of the power supply module (120) to be supplied to the firmware update target device through the second cable (142).

3. The firmware update apparatus (100) as claimed in claim 1 or 2, further comprising a display module (150) configured to display information related to the firmware update,
wherein the first processor (130) is configured to control at least one of a transmission status of the request packet, a reception status of the response packet, a status of supplying power to the firmware update target device, or an execution status of the firmware update of the firmware update target device to be displayed through the display module (150).

4. The firmware update apparatus (100) as claimed in any one of the preceding claims, further comprising a switch module (160) configured to input operation initiation for the firmware update,
wherein the first processor (130) is configured to control an operation of the firmware update for the firmware update target device to be initiated based on receiving an input of the switch module (160).

5. The firmware update apparatus (100) as claimed in any one of the preceding claims, further comprising a wireless communication module configured to perform wireless communication with the firmware update target device,
wherein the first processor (130) is configured to:
control the request packet to be wirelessly transmitted to the firmware update target device through the wireless communication module;
control the response packet to be wirelessly received from the firmware update target device through the wireless communication module; and
control the information about firmware to be updated to be transmitted to the firmware update target device through the wireless communication module and the firmware update to be performed.

6. The firmware update apparatus (100) as claimed in any one of the preceding claims, further comprising a wireless power supply module (190) including a first coil (191),
wherein the first processor (130) is configured to:
control the first coil (191) to generate a magnetic field by supplying power of the power supply module (120) to the first coil (191); and
control a wireless power receiving module including a second coil (231) to receive power through an induction current induced from the first coil (191) to the second coil (231) according to generation of the magnetic field, wherein the wireless power receiving module is included in the firmware update target device and arranged to face the wireless power supply module (190).

7. A firmware update system comprising:
a firmware update apparatus (100); and
a firmware update target device,
wherein the firmware update apparatus (100) comprises:
a first wireless communication module (170) configured to perform data transmission and reception with the firmware update target device wirelessly;
a memory slot (110) to or from which a memory storing information about firmware to be updated is attached or detached;
a power supply module (120) configured to supply power;
a wireless power supply module (190) including a first coil (191); and
a first processor (130) configured to control an operation of the firmware update apparatus (100) to perform a firmware update of the firmware update target device, and
the firmware update target device comprises:
a second wireless communication module (220, 220_1) configured to perform data transmission and reception with the firmware update apparatus (100) wirelessly;
a wireless power receiving module arranged to face the wireless power supply module (190) and including a second coil (231); and
a second processor (240, 240_1) configured to control data transmission and reception with the firmware update apparatus (100) through the second wireless communication module (220, 220_1) and control the wireless power receiving module to receive power through the wireless power supply module (190).

8. The firmware update system as claimed in claim 7, wherein the first processor (130) is configured to:
control a request packet including status request information to be transmitted to the firmware update target device through the first wireless communication module (170);
control a response packet including a response to the status request information to be received from the firmware update target device through the first wireless communication module (170);
based on receiving the response packet, control the first coil (191) to generate a magnetic field by supplying power of the power supply module (120) to the wireless power supply module (190); and
based on the information about firmware to be updated being transmitted to the firmware update target device through the wireless communication module, control the firmware update to be performed on the firmware update target device.

9. The firmware update system as claimed in claim 7 or 8, further comprising a cable connected between the firmware update apparatus (100) and the firmware update target device,
wherein the first processor (130) is configured to:
transmit a request packet including status request information to the firmware update target device through the cable;
receive a response packet including a response to the status request information from the firmware update target device through the cable; and
control the firmware update to be performed by transmitting the information about firmware to be updated to the firmware update target device through the cable.

10. The firmware update system as claimed in any one of the claims 7 to 9, wherein the firmware update apparatus (100) further comprises a display module (150) configured to display information related to the firmware update, and
the first processor (130) is configured to control at least one of a transmission status of the request packet, a reception status of the response packet, a status of supplying power to the firmware update target device, or an execution status of the firmware update of the firmware update target device to be displayed through the display module (150).

11. The firmware update system as claimed in any one of the claims 7 to 10, wherein the firmware update apparatus (100) further comprises a switch module (160) configured to input operation initiation for the firmware update, and
the first processor (130) is configured to control an operation of the firmware update for the firmware update target device to be initiated based on receiving an input of the switch module (160).

12. The firmware update system as claimed in any one of the claims 7 to 11, wherein the firmware update target device comprises a first firmware update target device to an Nth firmware update target device physically connected to each other through a power line, and
the wireless power receiving module is provided in any one of the first firmware update target device to the Nth firmware update target device.

13. The firmware update system as claimed in claim 12, wherein any one of the first firmware update target device to the Nth firmware update target device is configured to, after receiving power through the wireless power receiving module, supply power to remaining firmware update target devices through the power line.
